# EUROPEAN PATENT APPLICATION

(11) **EP 4 660 111 A1**
(43) Date of publication of application: **10.12.2025**
(21) Application number: 25179900.3
(22) Date of filing: 30.05.2025
(51) Int. Cl.: B65G 69/00, B65G 13/075

(54) **ROLLER DEVICE FOR RESTINGLY RECEIVING THE DRIVE WHEELS OF A GOODS TRANSPORT VEHICLE**

(30) Priority: 03.06.2024 IT 202400012577
(71) Applicant: I.T.A.L. - T.V.T. S.r.l., 48018 Faenza (RA) (IT)
(72) Inventor: TARDUCCI, Matteo, 47522 CESENA (FC) (IT)
(74) Representative: Dall'Olio, Christian

(57) **Abstract**

A roller device (1) is disclosed for restingly receiving the drive wheels (6) of a goods transport vehicle (7) which is stationary in a parking area of a loading bay (100) and for blocking/unblocking the rotation of the rollers so as to allow/prevent the advancement of the goods transport vehicle (7), and a loading bay (100) is disclosed which comprises such roller device (1). The roller device (1) comprises: a frame (2) comprising a housing (3); a plurality (11, 12) of rollers (4) which are rotatably borne by the frame (2), which are arranged in the housing (3); connecting means (13, 14) for connecting the rollers (4) together so that by blocking at least one roller (21, 22), it is possible to simultaneously block all the rollers (4); a blocking/unblocking unit (9, 10) for at least one roller (21, 22). The blocking/unblocking unit (9, 10) for at least one roller (21, 22) comprises: a rotating member (9) which is rotatably borne by the frame (2) and which is integral with the at least one roller (21, 22); a brake (10) which is arranged to rub against the rotating member (9), so that: by activating the brake (10) the rollers (4) of the plurality (11, 12) of rollers (4) are blocked and a goods transport vehicle (7) which is positioned with its drive wheels (6) on the rollers (4) can advance; by deactivating the brake (10) the rollers (4) are free to rotate and the goods transport vehicle (7) which is positioned with its drive wheels (6) on the rollers (4) cannot advance.

## Description

The present invention relates to the technical field of logistics, with particular reference to a loading bay. The invention also relates to a blocking/unblocking device for the drive wheels of a goods transport vehicle which is stationary in the parking area of a loading bay, for carrying out loading and/or unloading operations of goods.

From EP4059873B1 there is known a blocking/unblocking device for the drive wheels of a goods transport vehicle which is stationary in the parking area of a loading bay, comprising:
a frame which in turn comprises a housing;
a plurality of rollers which are rotatably borne by the frame, which are arranged in the housing one after the other so that their respective axes are parallel to each other and so that each offers an external portion to come into contact with the drive wheels of a goods transport vehicle;
connecting means for connecting the rollers of the plurality of rollers together, so that by blocking at least one roller of the plurality of rollers, it is possible to simultaneously block all the rollers of the plurality of rollers;
a blocking/unblocking unit of at least one roller of the plurality of rollers.

The blocking/unblocking unit of the at least one roller comprises: a first gear which is connected to the at least one roller by means of a chain, so as to receive motion therefrom; a second gear for blocking the first gear; and a hydraulic or pneumatic piston which is arranged to move the second gear between an active position, in which the second gear meshes with the first gear thereby blocking the rollers, so that a goods transport vehicle which is arranged with its drive wheels on the plurality of rollers can advance, and an inactive position, in which the second gear is disengaged from the first gear so that the rollers are free to rotate, so that the goods transport vehicle which is arranged with its drive wheels on the plurality of rollers cannot advance.

A drawback of this blocking/unblocking device for the drive wheels of a goods transport vehicle consists in the fact that engagement problems may arise between the first gear and the second gear when the hydraulic or pneumatic piston moves the second gear into the active position. In other words, the teeth of the second gear may hit the teeth of the first gear, instead of fitting between one gap and another of the teeth of the first gear, with the risk that meshing does not occur correctly and that the wear process of the teeth of both gears is accelerated.

The object of the present invention is to overcome the above-mentioned drawbacks.

This object has been achieved by means of a blocking/unblocking device for the drive wheels of a goods transport vehicle for a loading bay, in accordance with claim 1, and by a loading bay comprising such device, in accordance with claim 6.

Specific embodiments of the invention will be described in the following of the present discussion, in accordance with what is reported in the claims and with the aid of the accompanying drawing sheets, in which:
- figure 1 shows a perspective view of a blocking/unblocking device for the drive wheels of a goods transport vehicle for a loading bay, object of the present invention and in accordance with a first embodiment;
- figure 2 shows the blocking/unblocking device for the drive wheels of a goods transport vehicle of figure 1, in which some parts of the frame have been removed;
- figures 3, 4 respectively show enlarged perspective views of the details K1, K2 of figure 2;

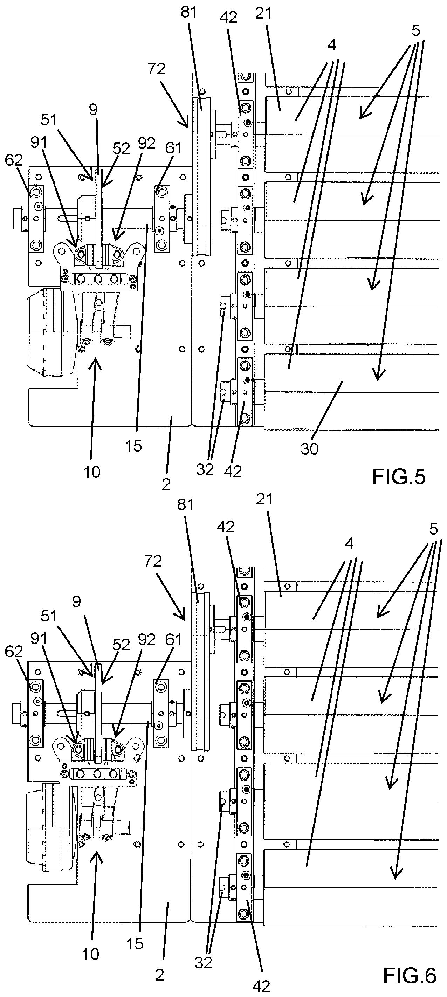

- figures 5, 6 show in enlarged scale and top view the detail K1 of figure 2, respectively when the brake is active and when the brake is inactive;
- figure 7 shows a perspective view of a blocking/unblocking device for the drive wheels of a goods transport vehicle for a loading bay, object of the present invention and in accordance with a second embodiment;
- figure 8 shows the blocking/unblocking device for the drive wheels of a goods transport vehicle of figure 7, in which some parts of the frame have been removed;
- figures 9, 10 show in enlarged scale and top view the detail K3 of figure 8, respectively when the brake is active and when the brake is inactive;
- figure 11 shows a side view of a loading bay, also object of the present invention, in which a goods transport vehicle is parked.

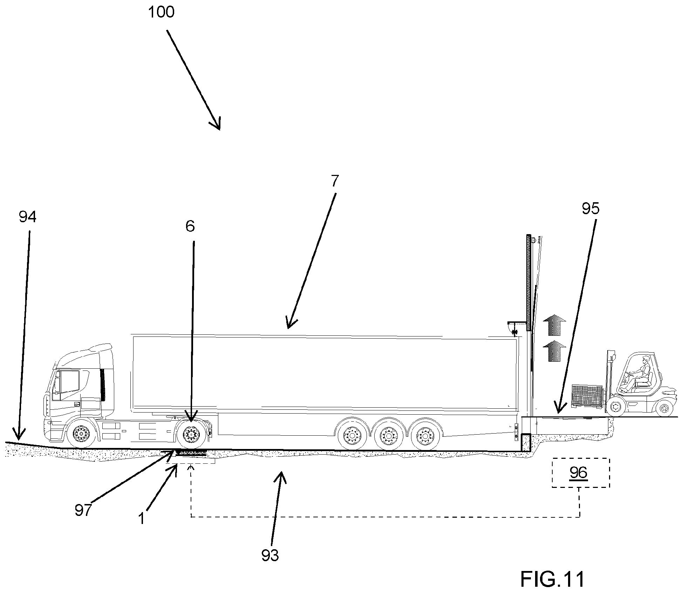

With reference to the accompanying drawing sheets, a roller device (1) has been indicated, for restingly receiving the drive wheels of a goods transport vehicle which is stationary in a parking area of a loading bay and for blocking/unblocking the rotation of the rollers so as to allow/prevent the advancement of the goods transport vehicle, object of the present invention, comprising:
a frame (2) which in turn comprises at least one housing (3);
a plurality (11, 12) of rollers (4) which are rotatably borne by the frame (2), which are arranged in the at least one housing (3) one after the other so that their respective axes are parallel to each other and so that each offers an external portion (5) to come into contact with the drive wheels (6) of a goods transport vehicle (7) (figure 11);
connecting means (13, 14) for connecting the rollers (4) of the plurality (11, 12) of rollers (4) together, so that by blocking at least one roller (21, 22) of the plurality (11, 12) of rollers (4), it is possible to simultaneously block all the rollers (4) of the plurality (11, 12) of rollers (4);
a blocking/unblocking unit (9, 10) for at least one roller (21, 22) of the plurality (11, 12) of rollers (4), which in turn comprises:
   a rotating member (9) which is rotatably borne by the frame (2) and which is integral with the at least one roller (21, 22) of the plurality (11, 12) of rollers (4);
   a brake (10) which is arranged to rub against the rotating member (9), so that: by activating the brake (10) the rollers (4) of the plurality (11, 12) of rollers (4) are blocked and a goods transport vehicle (7) which is positioned with its drive wheels (6) on the plurality (11, 12) of rollers (4) can advance; by deactivating the brake (10) the rollers (4) of the plurality (11, 12) of rollers (4) are free to rotate and the goods transport vehicle (7) which is positioned with its drive wheels (6) on the plurality (11, 12) of rollers (4) cannot advance.

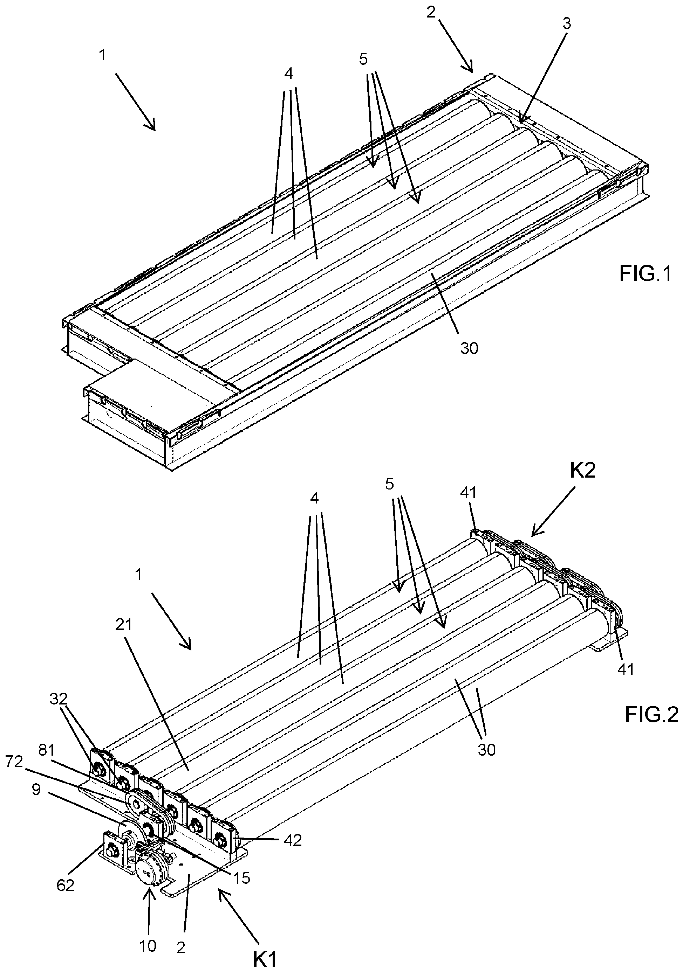

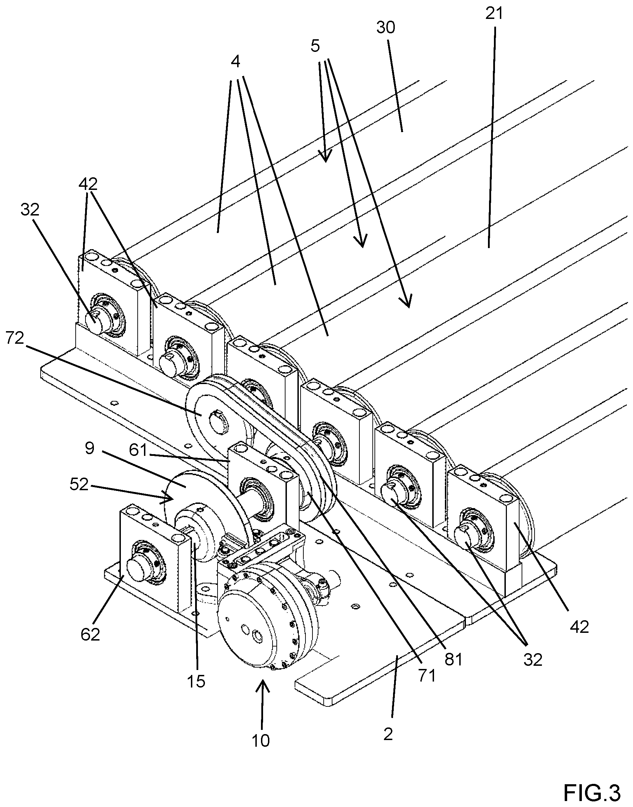

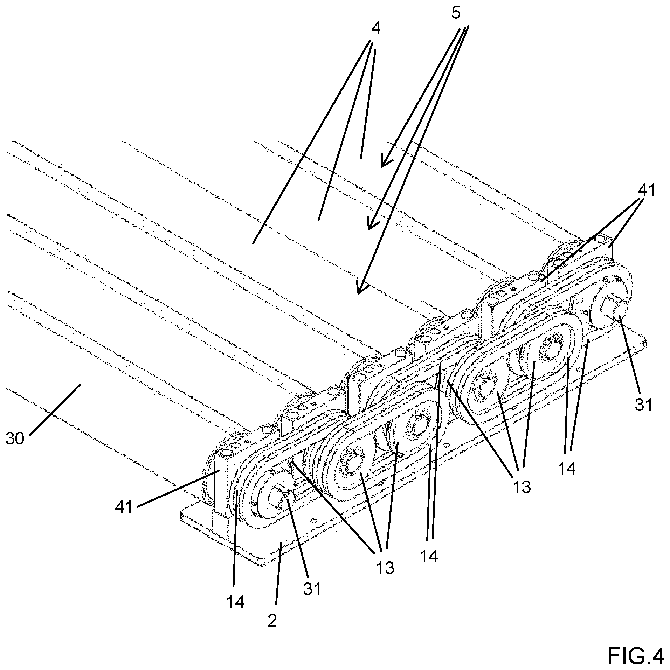

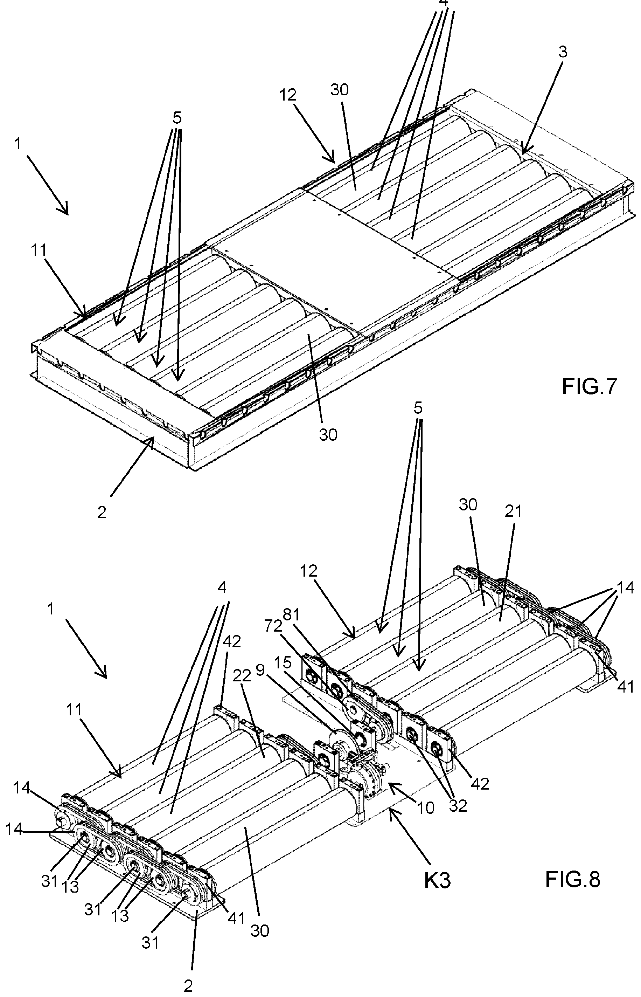

Each roller of the plurality (11, 12) of rollers (4) may comprise: a cylindrical body (30) (figures 2, 8) to come into contact with the drive wheels (6) of a goods transport vehicle (7); a first roller end (31) (figures 4, 8); and a second roller end (32) (figures 3, 8) which is opposite to the first roller end (31).

The frame (2) may comprise a plurality of roller supports (41, 42) which rotatably bear the rollers (4) of the plurality (11, 12) of rollers (4).

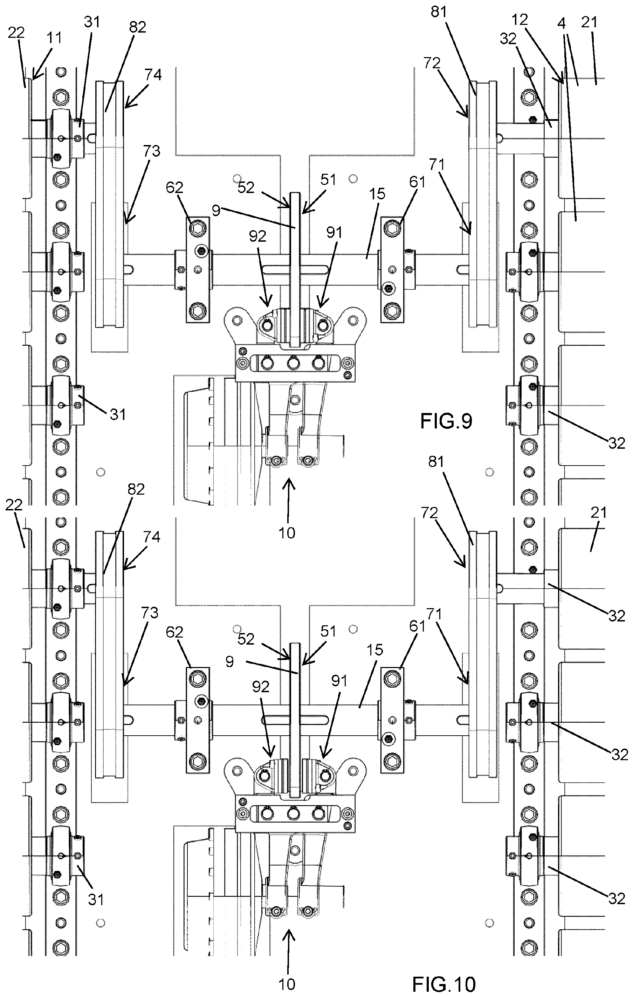

In particular, for each roller of the plurality (11, 12) of rollers (4), a first roller support (41) of the plurality of roller supports (41, 42) may be rotatably coupled to the first roller end (31) (figures 4,8) and a second roller support (42) of the plurality of roller supports (41, 42) may be rotatably coupled to the second roller end (32) (figures 3, 8) (in figures 9, 10 the roller supports (41, 42) of the plurality of roller supports (41, 42) are not shown).

The connecting means (13, 14) may comprise a plurality of connecting toothed wheels (13): in particular, one or more connecting toothed wheels (13) of the plurality of connecting toothed wheels (13) may be rigidly mounted (for example by interference fit) on each first roller end (31) of the rollers (4) of the plurality (11, 12) of rollers (4). Furthermore, the connecting means (13, 14) may comprise a plurality of connecting chains (14) which mesh with the connecting toothed wheels (13) of the plurality of connecting toothed wheels (13) (figures 4, 8) to make the rollers (4) of the plurality (11, 12) of rollers (4) substantially integral with one another.

The rotating member (9) may be shaped as a rotating disk (figure 3).

The disk may be provided with a first lateral surface (51) and a second lateral surface (52) which is opposite to the first lateral surface (51). The brake (10) may comprise a first jaw (91) for rubbing against the first lateral surface (51) when the brake (10) is activated and a second jaw (92) for rubbing against the second lateral surface (52) when the brake (10) is activated.

The first jaw (91) and the second jaw (92) may be opposite to each other.

Alternatively (solution not illustrated), the brake may comprise only one jaw for rubbing against the rotating member (for example against the first rotating surface if the rotating member is a disk).

The activation of the brake (10) may correspond to the condition in which the jaws rub against the rotating member (9), while the deactivation of the brake (10) may correspond to the condition in which the jaws are spaced apart from the rotating member (9), so that said rubbing is prevented.

The frame (2) may comprise a first rotating member support (61) and a second rotating member support (62) which are arranged on opposite sides with respect to the rotating member (9).

The roller device (1) may comprise: a shaft (15) on which the rotating member (9) is mounted and which is rotatably borne by the first rotating member support (61) and by the second rotating member support (62); a first transmission toothed wheel (71) which is mounted on the shaft (15), for example at a first end of the shaft (15); a second transmission toothed wheel (72) which is mounted on the at least one roller (21, 22) of the plurality (11, 12) of rollers (4), for example at the respective second roller end (32) of the at least one roller (21, 22) of the plurality (11, 12) of rollers (4); and a first transmission chain (81) which meshes with the first transmission toothed wheel (71) and with the second transmission toothed wheel (72) to transmit motion from the at least one roller (21, 22) of the plurality (11, 12) of rollers (4) to the rotating member (9). See figure 3.

As an alternative to the use of the first transmission toothed wheel (71), the second transmission toothed wheel (72) and the first transmission chain (81) to transmit motion from the at least one roller (21, 22) of the plurality (11, 12) of rollers (4) to the rotating member (9), it is possible to alternatively employ (solution not illustrated in the figures): a pair of toothed wheels meshing with each other, one mounted on the at least one roller (21, 22) of the plurality of rollers (4) and the other mounted on the shaft (15); a connection by means of an elastic joint between the at least one roller (21, 22) of the plurality of rollers (4) and the shaft (5); or a direct and rigid connection between the at least one roller (21, 22) of the plurality of rollers (4) and the shaft (5).

In accordance with the embodiment illustrated in figures 7-10:
the plurality (11, 12) of rollers (4) comprises a first sub-plurality (11) of rollers (4) and a second sub-plurality (12) of rollers (4), which are spaced apart so that the rollers (4) of the first sub-plurality (11) of rollers (4) can restingly receive one or more drive wheels (6) of a first side of the goods transport vehicle (7) (for example the right side in a top view) and the rollers (4) of the second sub-plurality (12) of rollers (4) can restingly receive one or more drive wheels (6) of a second side of the goods transport vehicle (7) (for example the left side in a top view), opposite to the first side;
the connecting means (13, 14) comprise:
   first connecting means (13, 14) for connecting the rollers (4) of the first sub-plurality (11) of rollers (4) together, so that by blocking at least one first roller (21) of the first sub-plurality (11) of rollers (4), it is possible to simultaneously block all the rollers (4) of the first sub-plurality (11) of rollers (4);
   second connecting means (13, 14) for connecting the rollers (4) of the second sub-plurality (12) of rollers (4) together, so that by blocking at least one second roller (22) of the second sub-plurality (12) of rollers (4), it is possible to simultaneously block all the rollers (4) of the second sub-plurality (12) of rollers (4).

In accordance with the embodiment of figures 7-10, the second transmission toothed wheel (72) is mounted on the at least one first roller (21) of the first sub-plurality (11) of rollers (4) and the first transmission chain (81) is specifically suitable for transmitting motion from the at least one first roller (21) of the first sub-plurality (11) of rollers (4) to the rotating member (9). Moreover, the roller device (1) may further comprise: a third transmission toothed wheel (73) which is mounted on the shaft (15), for example at a second end of the shaft (15) which is opposite to the first end of the shaft (15); a fourth transmission toothed wheel (74) which is mounted on the at least one second roller (22) of the second sub-plurality (12) of rollers (4); and a second transmission chain (82) which meshes with the third transmission toothed wheel (73) and with the fourth transmission toothed wheel (74) to transmit motion from the at least one second roller (22) of the second sub-plurality (12) of rollers (4) to the rotating member (9). See figures 9, 10.

As an alternative to the use of the third transmission toothed wheel (73), of the second transmission toothed wheel (72) and of the first transmission chain to transmit motion from the at least one first roller (21) of the first sub-plurality (11) of rollers (4) to the rotating member (9), it is possible to alternatively employ (solution not illustrated in the figures): a first pair of toothed wheels meshing with each other, one mounted on the at least one first roller (21) of the first sub-plurality (11) of rollers (4) and the other mounted on the shaft (15); a first connection by means of an elastic joint between the at least one first roller (21) of the first sub-plurality (11) of rollers (4) and the shaft (5); or a first direct and rigid connection between the at least one first roller (21) of the first sub-plurality (11) of rollers (4) and the shaft (5).

As an alternative to the use of the third transmission toothed wheel (73), of the fourth transmission toothed wheel (74) and of the second transmission chain (82) to transmit motion from the at least one second roller (22) of the second sub-plurality (12) of rollers (4) to the rotating member (9), it is possible to alternatively employ (solution not illustrated in the figures): a second pair of toothed wheels meshing with each other, one mounted on the at least one second roller (22) of the second sub-plurality (12) of rollers (4) and the other mounted on the shaft (15); a second connection by means of an elastic joint between the at least one second roller (22) of the second sub-plurality (12) of rollers (4) and the shaft (5); or a second direct and rigid connection between the at least one second roller (22) of the second sub-plurality (12) of rollers (4) and the shaft (5).

Preferably, the rotating member (9) is integral with both the at least one first roller (21) of the first sub-plurality (11) of rollers (4) and the at least one second roller (22) of the second sub-plurality (12) of rollers (4); the brake (10) is interposed between the first sub-plurality (11) of rollers (4) and the second sub-plurality (12) of rollers (4).

In this way, advantageously, it is possible to minimize the overall size of the roller device (1).

The present invention also relates to a loading bay (100) for loading and/or unloading goods contained in a goods transport vehicle (7), see figure 11, comprising:
a parking area (93) which comprises a pavement (94);
a dock (95) which is elevated with respect to the parking area (93), so that it is possible to load and/or unload goods into and/or from a goods transport vehicle (7) which is stationary in the parking area (93);
a roller device (1) as described above, which is installed in the pavement (94) of the parking area (93):
   so that an external portion (5) of each roller of the plurality (11, 12) of rollers (4) can come into contact with the drive wheels (6) of a goods transport vehicle (7); and in a position relative to the dock (95) such that when the goods transport vehicle (7) is stationary in the parking area (93) for loading and/or unloading goods, the drive wheels (6) of the goods transport vehicle (7) are positioned on the rollers (4) of the plurality (11, 12) of rollers (4);
   a control unit (96) which is configured to control the activation and deactivation of the brake (10) of the roller device (1).

The parking area (93) may be provided with a recess (97) made in the pavement (94). The housing (3) may be arranged inside the recess (97), so that the rollers (4) of the plurality (11, 12) of rollers (4) occupy the space defined by the recess (97) and each offers the aforesaid external portion (5) to come into contact with the drive wheels (6) of a goods transport vehicle (7) stationary in the parking area (93).

The roller device (1) may be arranged so that the axes of the rollers (4) of the plurality (11, 12) of rollers (4) are arranged perpendicularly with respect to the longitudinal axis of the goods transport vehicle (7).

It is understood that what has been described above is by way of example and not limitation, and that any constructional variants are intended to fall within the protective scope of the present technical solution, as claimed below.

## Claims

1. Roller device (1) for restingly receive the drive wheels (6) of a goods transport vehicle (7) which is stationary in a parking area of a loading bay (100) and for blocking/unblocking the rotation of the rollers so as to allow/prevent the advancement of the goods transport vehicle (7), wherein:
it comprises a frame (2) which in turn comprises at least one housing (3);
it comprises a plurality (11, 12) of rollers (4) which are rotatably borne by the frame (2), which are arranged in the at least one housing (3) one after the other so that their respective axes are parallel to each other and so that each offers an external portion (5) to come into contact with the drive wheels (6) of a goods transport vehicle (7);
it comprises connecting means (13, 14) for connecting the rollers (4) of the plurality (11, 12) of rollers (4) together so that by blocking at least one roller (21, 22) of the plurality (11, 12) of rollers (4), it is possible to simultaneously block all the rollers (4) of the plurality (11, 12) of rollers (4);
it comprises a blocking/unblocking unit (9, 10) for at least one roller (21, 22) of the plurality (11, 12) of rollers (4);
**characterized in that**:
the blocking/unblocking unit (9, 10) for at least one roller (21, 22) of the plurality (11, 12) of rollers (4) comprises:
a rotating member (9) which is rotatably borne by the frame (2) and which is integral with at least one roller (21, 22) of the plurality (11, 12) of rollers (4);
a brake (10) which is arranged to rub against the rotating member (9) so that: by activating the brake (10) the rollers (4) of the plurality (11, 12) of rollers (4) are blocked and a goods transport vehicle (7) which is positioned with its drive wheels (6) on the plurality (11, 12) of rollers (4) can advance; by deactivating the brake (10) the rollers (4) of the plurality (11, 12) of rollers (4) are free to rotate and the goods transport vehicle (7) which is positioned with its drive wheels (6) on the plurality (11, 12) of rollers (4) cannot advance.

2. Roller device (1) according to the preceding claim, wherein:
the plurality (11, 12) of rollers (4) comprises a first sub-plurality (11) of rollers (4) and a second sub-plurality (12) of rollers (4), which are spaced apart so that the rollers (4) of the first sub-plurality (11) of rollers (4) can support one or more drive wheels (6) of a first side of the goods transport vehicle (7) and the rollers (4) of the second sub-plurality (12) of rollers (4) can support one or more drive wheels (6) of a second side of the goods transport vehicle (7), opposite to the first side;
the connecting means (13, 14) comprise:
first connecting means (13, 14) for connecting the rollers (4) of the first sub-plurality (11) of rollers (4) together, so that by blocking at least one first roller (21) of the first sub-plurality (11) of rollers (4) it is possible to simultaneously block all the rollers (4) of the first sub-plurality (11) of rollers (4);
second connecting means (13, 14) for connecting the rollers (4) of the second sub-plurality (12) of rollers (4) together, so that by blocking at least one second roller (22) of the second sub-plurality (12) of rollers (4) it is possible to simultaneously block all the rollers (4) of the second sub-plurality (12) of rollers (4).

3. Roller device (1) according to the preceding claim, wherein: the rotating member (9) is integral with both at least one first roller (21) of the first sub-plurality (11) of rollers (4) and at least one second roller (22) of the second sub-plurality (12) of rollers (4); the brake (10) is interposed between the first sub-plurality (11) of rollers (4) and the second sub-plurality (12) of rollers (4).

4. Roller device (1) according to any of the preceding claims, wherein the rotating member (9) is shaped as a disk.

5. Roller device (1) according to the preceding claim, wherein: the disk comprises a first lateral surface (51) and a second lateral surface (52) which is opposite to the first lateral surface (51); the brake (10) comprises a first jaw (91) for rubbing against the first lateral surface (51) when the brake (10) is activated and a second jaw (92) for rubbing against the second lateral surface (52) when the brake (10) is activated.

6. Loading bay (100) for loading and/or unloading goods contained in a goods transport vehicle (7), comprising:
a parking area (93) which comprises a pavement (94);
a dock (95) which is elevated with respect to the parking area (93) so that it is possible to load and/or unload goods into and/or from a goods transport vehicle (7) which is stationary in the parking area (93);
a roller device (1) according to any of the preceding claims, which is installed in the pavement (94) of the parking area (93):
so that an external portion (5) of each roller of the plurality (11, 12) of rollers (4) can come into contact with the drive wheels (6) of a goods transport vehicle (7); and in a position relative to the dock (95) such that when the goods transport vehicle (7) is stationary in the parking area (93) for loading and/or unloading goods, the drive wheels (6) of the goods transport vehicle (7) are positioned on the rollers (4) of the plurality (11, 12) of rollers (4);
a control unit (96) which is configured to control the activation and deactivation of the brake (10) of the roller device (1).
